# EUROPÄISCHE PATENTANMELDUNG

(11) **EP 2 696 308 A1**
(43) Veröffentlichungstag der Anmeldung: **12.02.2014**
(21) Anmeldenummer: 13003883.9
(22) Anmeldetag: 02.08.2013
(51) Int. Cl.: G06F 21/62, G06F 21/79, G06F 21/80, G06F 3/06

(54) **Verfahren zum Schreiben und Lesen von Daten auf einem blockorientierten Speichermedium**

(30) Priorität: 06.08.2012 DE 102012015348
(71) Anmelder: Giesecke & Devrient GmbH, 81677 München (DE)
(72) Erfinder: Grobbel, Hubertus, 81829 München (DE)

(57) **Zusammenfassung**

Die vorliegende Erfindung betrifft ein Verfahren zum Schreiben und Lesen von Daten auf und von einem Speichermedium mit einem Kontroller, wobei im Zuge des Verfahrens mittels des Kontrollers die Daten in logischen Blöcken auf dem Speichermedium gespeichert oder von diesem gelesen werden. Erfindungsgemäß wird mindestens einem Block ein Klassifizierungsmerkmal mit einer Klassifizierungsregel zugeordnet, welches dem Block eine Vertraulichkeitsklasse zuweist. Vor einem Beschreiben eines Blocks oder einem Lesen eines Blocks werden Zugriffsrechte geprüft, die in der Klassifizierungsregel festgelegt sind, und kann eine in der Klassifizierungsregel festgelegte kryptografische Aktion erfolgen.

## Beschreibung

Die vorliegende Erfindung betrifft ein Verfahren zum Schreiben und Lesen von Daten auf und von einem blockorientierten Speichermedium mit einem Kontroller, wobei im Zuge des Verfahrens mittels des Kontrollers die Daten in logischen Blöcken auf dem Speichermedium gespeichert und von diesem gelesen werden.

Blockorientierte Massenspeichergeräte legen Daten in Blöcken oder Sektoren ab, wobei die Blockgröße typischerweise 512 Bytes oder 4096 Bytes beinhaltet. Typische Beispiele für blockorientierte Speichermedien sind Festplatten, USB-Speichersticks und Speicherkarten wie beispielsweise SD-Speicherkarten oder microSD-Speicherkarten.

Insbesondere sehr kompakte portable Speichermedien, wie microSD-Speicherkarten mit Flash-Speichern dienen einem Nutzer zum Abspeichern von digitalen Daten und bieten die Möglichkeit, die gespeicherten Daten bequem mit sich führen zu können. Beispielsweise finden portable blockorientierte Speichermedien in Endgeräten als wechselbare externe Speichermedien zur Speicherung von Bild-, Ton- oder Videodaten oder sonstigen Daten Verwendung.

Bekannte portable blockorientierte Speichermedien sind entweder ohne jede Sicherheitsvorkehrungen realisiert, sodass jeder Benutzer, also auch ein unbefugter Dritter Zugriff auf die Daten haben kann. Alternative bisher bekannte Lösungen, bei welchen Daten verschlüsselt auf blockorientierten Speichermedien abgelegt werden, existieren ebenfalls. So beschreibt DE 10 2009 019 051 A1 ein Speichermedium, bei welchem alle Daten verschlüsselt abgelegt werden. Die DE 10 2010 052 224 A1 beschreibt ein blockorientiertes Speichermedium, bei welchem ein Speicherkontroller Nutzdaten nur bei einer Authentisierung eines Nutzers freigibt, Dateiverwaltungsdaten hingegen auch ohne eine Authentisierung. Damit soll erreicht werden, dass auch ein Endgerät, bei welchem eine Authentisierung beispielsweise durch die Eingabe einer PIN-Nummer oder eines Passworts gar nicht vorgesehen ist, auf bestimmte Inhalte des blockorientierten Speichermediums zugreifen kann. Ansonsten wäre ein entsprechendes Speichermedium in vielen Endgeräten gar nicht betreibbar.

Nachteilig bei bisher bekannten blockorientierten Speichermedien mit Zugriffs- und Schreibschutz ist die Tatsache, dass entsprechende Speichermedien entweder alle Daten geschützt behandeln, was die Nutzung dieser Speichermedien für Endgeräte, die keine Authentisierung erlauben, unmöglich macht. Bei anderen Lösungen werden bestimmte Partitionen des blockorientierten Speichermediums komplett verschlüsselt oder alternativ die Nutzdaten, die auf dem Speichermedium abgelegt sind. Diese Verfahren sind zeitaufwendig und unflexibel.

Es ist daher Aufgabe der vorliegenden Erfindung, ein Verfahren zum Schreiben und Lesen von Daten auf und von einem Speichermedium zu schaffen, welches bezüglich der Vergabe von Lese- und Zugriffsrechten flexibler ausgestaltet und ressourcenschonender ist.

Diese Aufgabe wird gelöst durch ein Verfahren gemäß Anspruch 1.

Bei dem erfindungsgemäßen Verfahren zum Schreiben und Lesen von Daten auf und von einem Speichermedium mit einem Kontroller, bei dem im Zugriffsverfahren mittels des Kontrollers die Daten in logischen Blöcken auf dem Speichermedium gespeichert und von diesem gelesen werden, wird erfindungsgemäß mindestens einem Block ein Klassifizierungsmerkmal mit einer Klassifizierungsregel zugeordnet, welches dem Block eine Vertraulichkeitsklasse zuweist. Vor einem Beschreiben eines Blocks oder einem Lesen eines Blocks werden die Zugriffsrechte geprüft, die in der Klassifizierungsregel festgelegt sind. Entsprechend kann auch eine (oder mehrere) in der Klassifizierungsregel festgelegte kryptografische Aktion erfolgen.

Bei bekannten Verfahren war es nicht möglich, ein blockorientiertes Speichermedium zu realisieren, bei welchem Daten während eines Schreib- oder Lesevorgangs auf Blockebene klassifiziert werden. Das erfindungsgemäße Verfahren bietet daher den Vorteil, dass nicht nur entweder alle Daten verschlüsselt werden oder zumindest alle Nutzdaten, sondern je nach Klassifizierungsmerkmal des Blocks und der zugeordneten Klassifizierungsregel wird dem Block eine bestimmte Vertraulichkeitsklasse zugewiesen. Daraus resultiert, dass nicht unnötiger Verschlüsselungsaufwand betrieben wird (weil z.B. eigentlich nicht vertrauliche Nutzdaten verschlüsselt werden). Die Möglichkeit, dass verschiedene unterschiedliche Klassifizierungsmerkmale vorgesehen sein können, erhöht die Flexibilität des Verfahrens. So können beispielsweise Daten je nach Vertraulichkeit nur verschlüsselt transportiert und / oder abgespeichert und / oder ausgegeben werden. Jede dieser Verschlüsselungsaktionen kann dabei mit einem separaten Schlüssel erfolgen oder verschiedene Verschlüsselungsaktionen können einen gemeinsamen Schlüssel verwenden. Alternativ oder ergänzend können Zugriffsrechte festgelegt werden, was bedeutet, dass nur bestimmte Nutzer (Personen oder Geräte) die Datenblöcke mit diesem Klassifizierungsmerkmal lesen oder schreiben dürfen und dies beispielsweise eine vorherige Authentisierung erfordert.

Vorteilhafte Ausgestaltungen der vorliegenden Erfindung ergeben sich aus den Unteransprüchen.

Bei einer bevorzugten Ausführungsform der Erfindung weist das Klassifizierungsmerkmal eine statische Komponente auf, die nicht verändert wird.

Alternativ oder ergänzend kann das Klassifizierungsmerkmal eine dynamische Komponente aufweisen, die verändert oder im Zuge des Verfahrens auch entfernt werden kann.

Bei einer weiteren vorteilhaften Ausgestaltung dieses erfindungsgemäßen Verfahrens beinhaltet die kryptografische Aktion eine Verschlüsselung oder eine Entschlüsselung (eines vorher verschlüsselten Datensatzes) oder eine Umschlüsselung (Entschlüsseln eines Verschlüsselten Datenblocks und anschließend erneutes Verschlüsseln) durch den Kontroller mittels eines dem jeweiligen Klassifizierungsmerkmal zugeordneten Schlüssels oder mittels mehrere Schlüsseln (beispielsweise zwei Schlüsseln im Falle eines Umschlüsselns).

Ein entsprechender Schlüssel kann ein statischer Schlüssel sein, der im Zuge des Verfahrens unverändert bleibt oder ein Schlüssel auch ein dynamischer Schlüssel sein, der im Zuge des Verfahrens verändert oder erst ermittelt wird.

Dabei kann ein dynamischer Schlüssel eine dynamische Komponente aufweisen, die basierend auf einem Startwert ermittelt wird. In diesem Fall ist der eigentliche Schlüssel immer noch dem jeweiligen Klassifizierungsmerkmal zugeordnet, aber durch die dynamische Komponente erfolgt eine weitere Verfeinerung und Verbesserung des Verfahrens, da je nach übermitteltem Startwert die dynamische Komponente des Verfahrens geändert wird. Dies führt in Abhängigkeit von der dynamischen Komponente zu unterschiedlicher Verschlüsselung, obwohl der Inhalt und der zugrundeliegende Schlüssel identisch bleiben.

Bei einer weiteren bevorzugten Ausgestaltung der Erfindung können bestimmte Zugriffsrechte beinhalten, dass ein Schreib- oder Lesezugriff auf einen Block optional nur nach einer vorhergehenden Authentisierung erlaubt wird.

Bei einer besonders bevorzugten Ausgestaltung der Erfindung beinhaltet mindestens ein Block des Speichermediums einen durch den Kontroller lesbaren Header, der das dem Block zugeordnete Klassifizierungsmerkmal aufweist. Mit anderen Worten beinhaltet also jeder Block ein Klassifizierungsmerkmal, sodass der Kontroller beim Lesen oder vor dem Schreiben des Blocks direkt prüfen kann, wie vertraulich die entsprechenden Inhalte des Blocks sind und ob dementsprechend ein Verschlüsselung vorgenommen werden soll, oder ob eine Entschlüsselung des Blocks bei einem Lesevorgang nur dann erfolgen soll, wenn ein Nutzer vorher eine entsprechende Authentisierung vornimmt. Dementsprechend wird ein Anteil der Standardblockgröße (z.B. 512 Bytes) für diesen Header benutzt und / oder reserviert. Dabei ist die Größer des Headers allerdings im Vergleich zur gesamten Blockgröße so klein, dass die nutzbare Gesamtkapazität des Speichermediums nur unwesentlich reduziert wird.

Alternativ oder ergänzend zu dieser besonders bevorzugten Ausführungsform kann auch vorgesehen sein, dass im Kontroller Adressbereiche von Blöcken des Speichermediums hinterlegt sind, sowie diesen Adressbereichen zugeordnete Klassifizierungsmerkmale. Bei dieser Ausgestaltung des erfindungsgemäßen Verfahrens wird also nicht (nur) mit Headern gearbeitet, sondern über den Adressbereich eines Blocks des blockorientierten Speichermediums kann der Kontroller sofort erkennen, welches Klassifizierungsmerkmal den hier abgelegten Blöcken zuzuordnen ist.

Für die vorliegende Erfindung gibt es verschiedenste Anwendungsfälle, bei welchen in Abhängigkeit von den Inhalten von Datenblöcken bestimmte spezifische kryptografische Verfahren angewendet werden sollen. Ein beispielhafter Anwendungsfall ist die Verarbeitung von Firmendaten, wo bestimmte Datenblöcke mit einem Schreibschutz oder einem Leseschutz versehen werden sollen. Ein weiterer Anwendungsfall ist die digitale Rechteverwertung (Digital Rights Management, DRM) bei der die Nutzung unter Zugriff auf digitale Medien kontrolliert werden soll. So kann mittels DRM die Nutzung von digitalen Video- oder Audiodaten oder auch bei der Übermittlung von Software oder elektronischen Büchern verwaltet werden. Auch hier ist es von Vorteil, wenn, basierend auf den Inhalten der Datenblöcke ein entsprechendes kryptografisches Verfahren gestartet werden kann bzw. Zugriffsrechte geprüft werden können. Ein weiterer Anwendungsfall ist die Verwendung von eigenen (privaten) Mobilgeräten wie Notebooks oder Smartphones innerhalb Unternehmen, Schulen und Hochschulen oder anderen Organisationen mit Zugriff auf die Daten dieser Organisationen (als Alternative zur von organisationseigenen Geräten). Auch bei einem solchen "Bring Your Own Device" (BYOD) Verfahren bietet die vorliegende Erfindung wesentliche Vorteile, da in übermittelten oder gespeicherten Datenblöcke selbst deren Vertraulichkeit über das hinterlegte Klassifizierungsmerkmal enthalten ist, sowie die Informationen über Zugriffsrechte und anzuwendende kryptographische Prozeduren.

Dabei erlaubt die vorliegende Erfindung, dass ein entsprechendes blockorientiertes Speichermedium in jedem Gerät mit Standardapplikation betrieben werden kann, wobei die klassifizierten Datenblöcke eine Sicherheitsfunktionalität gewährleistet wird. Die Blockgröße eines entsprechenden Datenblocks ist dabei vorzugsweise die minimale Blockgröße des entsprechenden blockorientierten Speichermediums, sodass nur komplette Datenblöcke entsprechend ihrem Klassifizierungsmerkmal unter der zugeordneten Klassifizierungsregel bearbeitet werden und nicht etwa Bruchstücke von entsprechenden Datenblöcken. Damit wird die Datenintegrität einer Vertraulichkeitsklasse bis zur kleinsten möglichen Blockgröße gewährleistet. Die Daten können dabei vorzugsweise in Vertraulichkeitsklassen unterteilt werden, wie beispielsweise "Standard" oder "vertraulich" oder "privat". Weiterhin kann vorgesehen sein, dass eine Authentisierung für ein Schreiben, oder ein Lesen, für eine Verschlüsselung oder eine Entschlüsselung vorliegen muss, indem beispielsweise vor dem entsprechenden Vorgang eine PIN-Nummer eingegeben werden muss. Es ergibt sich daher als ein besonderen Vorteil der Erfindung, dass unterschiedliche Typen von Datenblöcken wie beispielsweise Standarddaten oder vertrauliche Daten verarbeitet werden können, ohne dass das Speichermedium in verschiedene Arbeitsmodi (geschützt / ungeschützt) umgeschaltet werden muss. Ein erfindungsgemäßer Header kann dabei statisch oder dynamisch ausgebildet sein oder im Zuge des Verfahrens auch während des Lesens oder Schreibens modifiziert werden. "Statisch" bedeutet dabei, dass er beispielsweise einem unveränderlichen Bitmuster entspricht. Dynamisch bedeutet, dass der Header oder Teile des Headers generiert wird, indem ein kryptografisches Verfahren wie beispielsweise Hashing oder Salted Hashing angewendet wird. Alternativ können auch digitale Signaturen mit Zufallswerten kombiniert werden, um Angriffe zu unterbinden. Der Klassifikationsheader kann dabei während eines gesamten Verarbeitungsprozesses (Schreibprozess oder Leseprozess) konstant sein oder während der Schreiboperation verändert werden und somit letztendlich nur noch Teile des Originalheaders beinhalten. Die Verschlüsselungsprozeduren, die angewendet werden, müssen nicht notwendigerweise von dem sicheren Speichermedium selbst zur Verfügung gestellt werden, allerdings kann dies beispielsweise bei einem Flash-Kontroller der Fall sein. Im Folgenden soll die vorliegende Erfindung anhand einer microSD-Speicherkarte näher erläutert werden.

Der Flash-Kontroller einer solchen Speicherkarte kann jeden Datenblock, der von einem Host (beispielsweise einem Endgerät wie einem Smartphone) kommt, oder zu einem Host übermittelt wird, lesen. Somit ist es für den Kontroller auch möglich, nach einem Klassifikationsheader zu suchen. Sobald ein entsprechender Header entdeckt wurde, kann der Kontroller Regeln für das weitere Prozessieren des Datenblocks ableiten und anwenden. Beispielsweise kann der Kontroller einen Schreibschutz (Read-Only-Zugriff) zur Verfügung stellen, für den Fall, dass Blöcke, in die Daten geschrieben werden sollen, vor dem Überschreiben gelesen werden. Für den Fall, dass hier eine "Read-Only"-Klassifizierung entdeckt wird, wird der entsprechende Block nicht überschrieben. Dieser Ansatz hat allerdings einen Performance-Nachteil, da jeder Block der beschrieben werden soll, ein vorheriges Lesen des Datenblocks und ein Ermitteln der zugehörigen Klassifizierung notwendig macht. Dies muss jedoch nicht für jeden Anwendungsfall einen signifikanten Nachteil bedeuten.

Für den Fall, dass in einem bestimmten Speicherblock kein Header detektiert wird und dieser auch nicht in einem Adressbereich liegt, zu welchem bestimmte Klassifizierungsmerkmale hinterlegt sind (oder in einen solchen Adressbereich geschrieben werden soll), arbeitet der Flash-Kontroller wie ein Standard-Flash-Kontroller. Wird hingegen ein Header entdeckt, wird in einer Klassifikationsregeltabelle nach der entsprechenden Klassifikationsregel gesucht. Der Kontroller kann dabei kryptografische Verfahren wie ein Verschlüsseln oder ein Entschlüsseln oder ein Umschlüsseln vornehmen.

Folgende beispielhafte Fälle können dabei durchlaufen werden:

### Beispiel 1:

Ein Host schreibt einen unverschlüsselten Datenblock auf eine microSD-Speicherkate, wobei der Datenblock einen Header der Klasse 1 aufweist. Die Nutzdaten des entsprechenden Datenblocks werden daher entsprechend der Klassifizierungsklasse 1 klassifiziert. Die Regel ist dabei so konfiguriert, dass der Inhalt während des Speicherprozesses nicht modifiziert wird. Auch der Klassifizierungsheader wird während der Speicherung in der Flash-Speicherkarte nicht modifiziert. Zu einem späteren Zeitpunkt versucht der Host wiederum, den entsprechenden Speicherblock zu lesen. Auch hier detektiert der Flash-Kontroller wieder den Klassifikationsheader 1 und wendet eine entsprechende Regel für einen Leseprozess an, wonach der Block vor der Ausgabe mit einem Schlüssel 1 verschlüsselt wird. Diese Funktionalität kann beispielsweise bei DRM-Systemen verwendet werden, wo zunächst DRM-geschützter Inhalt auf dem Speichermedium abgelegt wird und der Zugriff oder das Abspielen der Daten beispielsweise mittels eines Mobiltelefons über einem sicheren Kanal stattfindet, in welchem transferierte Daten mit dem Schlüssel 1 verschlüsselt werden. Der Schlüssel 1 kann dabei dynamisch oder statisch sein und während einer Automatisierung erzeugt werden. Der Inhalt kann dann in einem DRM-Spieler mittels des dort abgelegten Schlüssels 1 entschlüsselt und abgespielt werden. Somit ist gewährleistet, dass niemals unverschlüsselte Daten das Speichermedium verlassen und Daten daher nur nach einer vorhergehenden Authentisierung genutzt werden können. Diese Regel ist mit den bekannten DRM-Systemen kompatibel, wenn die entsprechend klassifizierten Nutzdaten bei der Ausgabe verschlüsselt werden und ein Abspielgerät eine Entschlüsselung mit dem entsprechenden Schlüssel 1 durchführen kann.

### Beispiel 2:

Ein Hostgerät schreibt einen mit einem Schlüssel 2 verschlüsselten Datenblock mit einem Klassifizierungsheader 2 auf die microSD-Speicherkarte. Die zugehörigen Nutzdaten werden dementsprechend mit der Klassifizierungsregel 2 klassifiziert. Diese Regel legt fest, dass die Daten beim Speicherprozess nicht modifiziert werden. Auch der Klassifizierungsheader wird in diesem Fall während des Speichervorgangs auf der Flash-Speicherkarte nicht modifiziert. Bei einem Lesezugriff des Hosts auf den klassifizierten Block entdeckt der Flash-Kontroller den Klassifizierungsheader 2 und wendet in diesem Fall daher eine Entschlüsselungsprozedur mit dem Schlüssel 2 an. Diese Funktionalität kann für einen Inhaltsschutz verwendet werden, wo geschützte Inhalte bereits beim Transfer zur Speicherkarte verschlüsselt waren, also beispielsweise verschlüsselt heruntergeladen wurden, und das Abspielen der geschützten Inhalte beispielsweise in einem Mobiltelefon mit einer Standardapplikation (also ohne der Möglichkeit einer Entschlüsselung) durchgeführt wird. In diesem Fall ist gewährleistet, dass geschützte Inhalte gemäß Regel 2 auf dem Speichermedium verschlüsselt sind und dieses nie unverschlüsselt verlassen, wenn nicht zuvor eine Authentifizierung durchgeführt wurde.

### Beispiel 3:

Der Host schreibt einen Datenblock auf die microSD-Speicherkarte mit einem Klassifizierungsheader 3. Die Nutzdaten werden dementsprechend mit dem Klassifizierungsmerkmal 3 versehen. Die entsprechende Klassifizierungsregel sieht vor, dass der Kontroller die Daten während des Schreibvorgangs mit einem Schlüssel 3 verschlüsselt. Der Klassifizierungsheader selbst wird jedoch während des Schreibvorgangs auf die Speicherkarte nicht modifiziert. Bei einem anschließenden Lesezugriff durch den Host entdeckt der Kontroller wiederum den Header 3 und wendet eine entsprechende Regel an, wonach die Daten ohne eine Modifikation und auch ohne dass eine vorherige Authentisierung notwendig wäre, vom Host eingelesen werden können. Diese Funktionalität kann verwendet werden, wenn Inhalte verteilt werden, und die Verteilung mittels des Schlüssels 3 erfolgt (beispielsweise bei einem Download), um das Abspielen beispielsweise mit einem Mobiltelefon in einer Standardapplikation stattfindet. Der Inhalt der mittels Regel 3 klassifiziert wurde, kommt somit in mit Schlüssel 3 verschlüsselter Form an und jede Applikation, die über den Schlüssel 3 verfügt, kann den Inhalt lesen.

### Beispiel 4:

Ein Hostgeräte schreibt Datenblöcke, die mit einem Schlüssle 4a verschlüsselt sind und einen Klassifizierungsheader 4 aufweisen, auf das Speichermedium. Die zugehörigen Klassifizierungsregel 4 ist so ausgestaltet, dass die Daten zunächst mit dem Schlüssel 4a entschlüsselt mit dann einem Schlüssel 4b erneut verschlüsselt und in den Flash-Speicher geschrieben werden. Somit wird bei einem Transport der Daten der Schlüssel 4a verwendet und zum Speichern der Schlüssel 4b, es findet also eine Umschlüsselung der Daten statt. Auch hierbei wird der Klassifizierungsheader nicht modifiziert, also nicht verschlüsselt versendet oder auf dem Flash-Speicher abgespeichert und bei einem Lesezugriff durch den Host zu einem späteren Zeitpunkt ist in der entsprechenden Regel 4 hinterlegt, dass der Kontroller auf eine vorherige PIN-Authentisierung besteht, bevor er die Daten mit dem Schlüssel 4b wiederum entschlüsselt und anschließend beispielsweise mit einem dritten Schlüssel 4c verschlüsselt, bevor der Datenblock zum Host gesendet wird. Die Funktionalität kann also dann verwendet werden, wenn Daten in verschlüsselter Form verteilt und verschickt werden (Schlüssel 4a) und nach einem Download auf ein Speichermedium die Daten mit dem Schlüssel 4b abgespeichert werden. Ein Abspielen beispielsweise mit einem Mobiltelefon und einer DRM-Anwendung kann dann stattfinden über eine Entschlüsselung mittels des Schlüssels 4c. Somit werden die Daten verschlüsselt verschickt, abgelegt und ausgelesen und zwar jeweils in einer verschlüsselten Form unter Verwendung unterschiedlicher Schlüssel 4a, b und c. Natürlich können auch zwei oder alle drei der aufgeführten Schlüssel identisch sein. Der Schlüssel 4c kann dabei statisch sein oder dynamisch ausgehandelt werden. Der Schlüssel 4b kann systemspezifisch oder kartenindividuell sein, und auch der Schlüssel 4a kann systemspezifisch oder kartenindividuell ausgestaltet sein. Das Authentisierungsverfahren kann auf einer PIN basieren oder auf einem Zertifikat, wobei letzteres gewährleistet, dass der gelesene Inhalt zu einer sicheren Anwendung oder Plattform übermittelt wird.

## Patentansprüche

1. Verfahren zum Schreiben und Lesen von Daten auf und von einem Speichermedium mit einem Kontroller, wobei im Zuge des Verfahrens mittels des Kontrollers die Daten in logischen Blöcken auf dem Speichermedium gespeichert oder von diesem gelesen werden,
**dadurch gekennzeichnet, dass**
mindestens einem Block ein Klassifizierungsmerkmal mit einer Klassifizierungsregel zugeordnet wird, welches dem Block eine Vertraulichkeitsklasse zuweist, und vor einem Beschreiben eines Blocks oder einem Lesen eines Blocks Zugriffsrechte geprüft werden, die in der Klassifizierungsregel festgelegt sind, und / oder eine in der Klassifizierungsregel festgelegte kryptografische Aktion erfolgt.

2. Verfahren nach Anspruch 1, wobei das Klassifizierungsmerkmal eine statische Komponente aufweist, die nicht verändert wird.

3. Verfahren nach Anspruch 1, wobei das Klassifizierungsmerkmal eine dynamische Komponente aufweist, die im Zuge des Verfahrens verändert oder entfernt wird.

4. Verfahren nach einem der vorhergehenden Ansprüche, wobei die kryptografische Aktion eine Verschlüsselung oder eine Entschlüsselung oder eine Umschlüsselung durch den Kontroller mittels einem oder mehreren dem jeweiligen Klassifizierungsmerkmal zugeordneten Schlüsseln beinhaltet.

5. Verfahren nach Anspruch 4, wobei mindestens ein Schlüssel ein statischer Schlüssel ist, der unverändert bleibt.

6. Verfahren nach Anspruch 4 oder 5, wobei mindestens ein Schlüssel ein dynamischer Schlüssel ist, der im Zuge des Verfahrens verändert oder ermittelt wird.

7. Verfahren nach Anspruch 6, wobei der dynamische Schlüssel eine dynamische Komponente aufweist, die basierend auf einem Startwert ermittelt wird.

8. Verfahren nach einem der vorhergehenden Ansprüche, wobei die Zugriffsrechte beinhalten, dass ein Schreib- oder Lesezugriff auf einen Block optional nur nach einer vorhergehenden Authentisierung erlaubt wird.

9. Verfahren nach einem der vorhergehenden Ansprüche, wobei der mindestens eine Block des Speichermediums einen durch den Kontroller lesbaren Header beinhaltet, der das dem Block zuordnete Klassifizierungsmerkmal aufweist.

10. Verfahren nach einem der vorhergehenden Ansprüche, wobei im Kontroller der Adressbereich des mindestens einen Blocks des Speichermediums hinterlegt ist, sowie das diesem Adressbereich zugeordnete Klassifizierungsmerkmal.
